# FASCICULE DE BREVET EUROPEEN

(11) **EP 3 113 856 B1**
(45) Date de publication et mention de la délivrance du brevet: **27.06.2018**
(21) Numéro de dépôt: 15713197.0
(22) Date de dépôt: 03.03.2015
(51) Int. Cl.: B01D 1/16, B01D 1/18, C02F 1/04, C02F 1/12, C02F 1/46

(54) **DISPOSITIF DE DISTILLATION PAR POLARISATION ET NÉBULISATION DANS UNE BOUTEILLE ÉLECTROSTATIQUE**
DESTILLATIONSVORRICTHUNG DURCH POLARISATION UND NEBULISATION IN EINER ELEKTROSTATISCHEN FLASCHE
DISTILLATION DEVICE BY POLARISATION AND NEBULISATION IN AN ELECTROSTATIC BOTTLE

(30) Priorité: 04.03.2014 FR 1400566
(43) Date de publication de la demande: 11.01.2017
(73) Titulaire: Elefant, Felix, 94120 Fontenay-sous-Bois (FR)
(72) Inventeur: Elefant, Felix, 94120 Fontenay-sous-Bois (FR)
(74) Mandataire: Cabinet Plasseraud
(86) Numéro de dépôt international: PCT/FR2015/000044
(87) Numéro de publication internationale: WO 2015/132483

(56) Documents cités:
- WO-A1-2012/124550
- US-A- 1 419 664
- US-A- 3 011 543
- US-A- 3 871 180
- US-A- 4 135 965
- US-A- 4 323 424
- US-A1- 2011 042 199
- US-A1- 2014 048 467

## Description

La présente invention s'inscrit dans le domaine général de la séparation d'espèces chimiques en solution électrolytique, et offre des avantages spécifiques dans le contexte particulier du dessalement de l'eau.

Ces avantages apparaissent clairement à la lueur des difficultés que rencontrent les dispositifs de dessalement usuels. À ce jour, deux familles de solutions techniques sont prédominantes.

Les techniques de dessalement par osmose inverse exploitent une membrane perméable aux molécules d'eau, mais pas aux sels. Un gradient de pression de part et d'autre du dispositif permet de vaincre le phénomène naturel d'osmose, et ainsi de forcer l'écoulement de l'eau à travers la membrane.

Cette technique requiert un traitement chimique et un filtrage très fin en amont de la membrane afin d'éviter l'obstruction de celle-ci. En outre, les membranes et les filtres sont coûteux, et doivent faire l'objet d'un nettoyage ou d'un remplacement réguliers. De nombreuses recherches et dépôts de brevet attestent de l'enjeu majeur que représente le filtrage pour l'osmose inverse: on peut citer le brevet WO2012037274 (A2), publié le 22-03-2012, à titre d'illustration.

Appliquée au dessalement d'eau de mer ou de saumures, l'osmose inverse nécessite, pour être efficace, un dispositif dont la complexité et les opérations de maintenance s'accommodent mal de petites structures, ce qui plaide en faveur d'installations de grande envergure.

Par ailleurs, l'osmose inverse rencontre des difficultés importantes dans le cas de salinités élevées, typiquement supérieures à 40 g/l, comme il s'en trouve dans le Golfe Persique par exemple.

D'autres techniques de dessalement reposent sur un procédé de distillation. Selon son principe originel, la distillation requiert, pour sa mise en oeuvre, des moyens techniques plus modestes que l'osmose inverse: l'absence de membrane autorise un filtrage et traitement chimique beaucoup plus sommaires voire inexistants, ainsi que des infrastructures relativement réduites. L'économie initiale s'effectue cependant au prix d'une consommation d'énergie beaucoup plus élevée.

Afin de pallier cet inconvénient, différentes méthodes de distillation ont été développées qui permettent de recycler l'essentiel de la chaleur utilisée pour la vaporisation de l'eau. Parmi celles-ci, la distillation multi-étages et la distillation multi-effets sont les plus répandues, et font l'objet de nombreux articles scientifiques et brevets d'invention dont WO 2005100252 (A1), publié le 27-10-2005, est une illustration.

Le document US 1 419 664 divulgue un dispositif de dessication par évaporation, et le document US 3 011 543 divulgue un dispositif de séchage par atomisation.

En dépit des économies d'énergie réalisées, ces méthodes restent généralement plus consommatrices d'énergie que l'osmose inverse. De surcroît, la grande majorité des dispositifs fondés sur ces méthodes chauffent la solution à dessaler alors même qu'elle est en contact avec une paroi du dispositif, qu'il s'agisse d'une enceinte, d'une tubulure, ou de la source de chaleur elle-même. Le mouillage d'une telle paroi est problématique, car il favorise considérablement la corrosion, ainsi que les dépôts de tartre, du fait de la température.

En réponse à ces problèmes, la présente invention définit un ensemble de dispositions originales mettant en oeuvre un traitement par distillation, au cours duquel la vaporisation s'effectue de manière à minimiser le transfert thermique direct vers la solution liquide. En effet, la température réduite de la solution qui traverse le dispositif limite la corrosion des parois et les dépôts de tartre, ce qui contribue à la longévité du système, à l'efficacité des surfaces d'échange, et à une diminution de la maintenance nécessaire.

Le dispositif, objet de la présente invention, est défini dans la revendication 1. Il est essentiellement constitué d'une ou plusieurs chambres de distillation pouvant être alimentées en solution électrolytique préchauffée en vue de son traitement. La solution entrante peut être préalablement filtrée afin d'en retirer les éléments solides les plus volumineux qui représentent un risque d'obstruction des tubulures et des surfaces d'échange.

Une chambre de distillation permet de séparer la partie la plus volatile de la solution, le distillat, par vaporisation, puis condensation au contact d'une surface froide. Le résidu de solution n'ayant pas été vaporisé est recueilli dans la partie inférieure de la chambre en vue de son évacuation.

Les parois de la source de chaleur constituent les surfaces les plus sensibles à la corrosion et aux dépôts par voie chimique, du fait de leur température. Pour cette raison, l'invention met en oeuvre un système de chauffage indirect, par convection gazeuse, qui permet d'éviter le mouillage des surfaces d'échange de la source de chaleur. Le liquide se vaporise donc lentement par évaporation, et non par ébullition comme c'est le cas dans la plupart des systèmes usuels.

Or, la lenteur d'un tel processus de vaporisation nuit à l'efficacité du dispositif. Pour pallier ce problème, l'invention prévoit l'utilisation d'un système de nébulisation de la solution électrolytique afin de favoriser son interaction avec le gaz circulant dans la chambre distillation, et ainsi d'accélérer son évaporation.

La solution à traiter est injectée dans la chambre de distillation à l'aide d'une buse polarisée produisant un jet de gouttes électriquement chargées. Ces gouttes sont ensuite divisées et réparties grâce à un jeu de lentilles électriques, de manière à former une brume de fines gouttelettes occupant la majeure partie du volume de la chambre. Particulièrement volatiles et réactives, ces gouttelettes présentent le risque d'être emportées par les gaz ascendants jusqu'au condenseur où elles sont susceptibles de contaminer le distillat. En outre, ces gouttelettes peuvent être source de dépôts et de corrosion si elles entrent en contact avec les parois de la chambre.

Afin de remédier à cet inconvénient, la présente invention tire profit de la charge électrique des gouttelettes pour les confiner, par répulsion électrostatique, au sein d'une enveloppe conductrice porteuse d'une charge identique à celle des gouttes. Cette enveloppe forme une bouteille qui isole la solution en phase liquide des organes sensibles du dispositif. Par ailleurs, la partie inférieure de la bouteille électrostatique présente une ouverture menant à un réceptacle permettant la coalescence des gouttelettes résiduelles en vue de leur évacuation.

Durant le séjour dans la chambre de distillation, les gouttelettes se refroidissent et s'amincissent par évaporation. À l'issue de ce processus, les gouttelettes résiduelles contiennent une solution plus concentrée qu'à leur entrée dans la chambre.

Statistiquement, la concentration chimique d'une gouttelette est fonction de son diamètre. Cette propriété peut être exploitée grâce à un système de tamisage ayant vocation à optimiser le phénomène de nébulisation, et à contrôler le gradient de concentration au sein de la bouteille. Selon l'invention, deux options, éventuellement complémentaires, sont envisageables selon le type de gouttelettes et l'effet recherché. La première met en oeuvre une barrière électrostatique poreuse qui repousse les plus grosses gouttelettes tout en laissant passer les plus petites. La seconde opère un filtrage et un égouttage à l'aide d'une plaque chauffante perforée de manière à obtenir la caléfaction des gouttelettes incidentes: une fine pellicule de vapeur se forme et isole les gouttelettes de la surface de la plaque. Pour une température de la grille nettement supérieure à la température d'ébullition du liquide, il est possible d'obtenir une lévitation durable des gouttelettes sur un coussin de vapeur qui empêche le mouillage. Ce phénomène physique bien connu, appelé effet Leidenfrost, apparaît à une température d'environ 160 °C dans le cas d'un solvant aqueux sous pression atmosphérique. Dans cette seconde option, la plaque constitue une source de chaleur pour les gaz ascendants, qui peut être exclusive ou complémentaire d'une source située à l'extérieur de la bouteille électrostatique.

En tout état de cause, le volume et la répartition initiale des gouttes entrantes peuvent être contrôlés électriquement par le système d'injection, si bien que la vitesse de vaporisation du liquide et donc le taux de distillation, à savoir la quantité de distillat produit rapportée au volume de solution traitée, sont dynamiquement ajustables.

La chaleur reçue par le condenseur, ainsi que la chaleur résiduelle contenue dans le distillat, et recyclée à l'aide d'un échangeur, servent à préchauffer la solution entrante qui restituera, à son tour, tout ou partie de cette chaleur à l'occasion du processus de vaporisation. Ainsi, la solution résiduelle recueillie dans la partie inférieure de la chambre est aussi froide que possible, ce qui limite, à nouveau, la corrosion et la formation de dépôts. Dans l'hypothèse où le résidu contiendrait encore de la chaleur, celle-ci peut être avantageusement recyclée par un second échangeur.

En complément, les gaz relativement chauds et secs qui émanent du condenseur peuvent être aspirés et réinjectés en bas de la chambre de manière à favoriser l'évaporation des gouttelettes lors de leur chute.

Par ailleurs, il est possible de produire dans la chambre une pression sensiblement inférieure à une atmosphère afin de favoriser l'évaporation du liquide à basse température.

Le dispositif, dans son ensemble, tire avantage d'un débit abondant de la solution électrolytique au regard de la quantité de vapeur produite. D'une part la vitesse d'écoulement de la phase liquide limite le risque de formation de dépôts par stagnation, d'autre part un débit accru de solution entrante, par comparaison au débit de vapeur produit, favorise le refroidissement des surfaces d'échanges, et notamment du condenseur. Par sa conception particulière, le dispositif privilégie donc l'efficacité énergétique et l'économie de maintenance au détriment du taux de distillation.

En somme, la présente invention est adaptée au traitement de solutions électrolytiques de faible valeur ajoutée, pour lesquels le coût de production est essentiellement dû à la distillation elle-même, ou bien de solutions chimiquement agressives au voisinage de leur température d'ébullition. À ce titre, l'invention est susceptible d'applications industrielles, notamment dans le domaine du dessalement de l'eau, et, à plus forte raison, dans le cas de salinités élevées comme il s'en rencontre dans l'eau de mer ou dans les saumures.

Un mode de réalisation particulier, propre au dessalement de l'eau, est exposé, à titre illustratif et nullement limitatif, dans la description ci-après, et par référence au dessin figurant en annexe, qui représente une vue en coupe d'une chambre de distillation.

Selon l'invention, un dispositif de distillation comprend une ou plusieurs chambres verticales contenant un système d'injection et de nébulisation produisant un jet de gouttelettes électrisées qui se propagent dans une bouteille électrostatique (1) parcourue par un gaz chauffé. La chambre est également munie d'un condenseur (2), en partie haute, et d'une source de chaleur (3), en partie basse, tous deux situés à l'extérieur de la bouteille (1) qui les protège des gouttelettes.

Le système d'injection se compose d'une buse (4) dont le canon étroit est tapissé d'un revêtement lisse (5), typiquement du téflon, du verre, ou de l'acier inoxydable, qui vient en recouvrement de l'orifice (6) afin de limiter les dépôts. À ce titre, il peut être avantageux de munir la buse d'un outil de nettoyage (7) intégré, typiquement un jeu de brosses montées sur une tringle décrivant un mouvement automatisé axial et rotatif le long de la paroi intérieure (5) de la buse (4).

Afin de polariser la colonne liquide contenue dans le canon de la buse (4), un circuit électrique applique une tension contrôlée entre deux électrodes, à savoir respectivement une électrode immergée (8), située à la base de la buse (4), et une électrode déportée (9), dans le volume de la chambre, à l'aplomb de l'orifice (6). L'électrode immergée (8), qui est en contact direct et permanent avec la solution à traiter, est constituée d'un matériau résistant à la corrosion. L'électrode déportée (9), de forme annulaire coaxiale avec le canon de la buse (4), exerce une influence à distance sur la solution entrante: attirées par l'électrode (9), des charges s'accumulent à proximité de l'orifice (6), et déforment le ménisque de la solution jusqu'à l'apparition d'une goutte électriquement chargée. À l'issue de sa formation, la goutte chute à travers le trou central de l'anneau formé par l'électrode déportée (9) sans toucher sa surface. Une brève impulsion électrique synchronisée avec le passage de la goutte par le centre de l'anneau provoque l'éclatement de cette dernière et la dispersion des gouttelettes ainsi produites.

Un écran répulsif (10), constitué d'une feuille métallique portée au même potentiel que l'électrode immergée (8), cerne les flancs et la sous-face de l'électrode déportée (9), afin de la protéger du retour éventuel de gouttelettes en suspension dans la chambre.

En complément, le dispositif peut avantageusement comprendre une électrode de répartition (11) de même polarité que l'électrode immergée (8), et située à l'aplomb de la buse (4) de manière à accentuer la dispersion des gouttelettes. Cette électrode (11) possède typiquement la forme d'un cône rainuré, dont le sommet est tourné vers la buse (4): les rainures, joignant le sommet et la base du cône, se répartissent régulièrement à sa surface, de façon à canaliser séparément les gouttelettes provenant de l'électrode déportée (9).

Selon l'invention, les rainures de l'électrode de répartition (11) peuvent aboutir à une lentille de nébulisation, constituée d'une électrode annulaire (12), de polarité opposée à l'électrode immergée (8), et exerçant sur les gouttelettes une force d'attraction qui tend à les pulvériser à leur sortie des rainures. Chaque lentille comporte, en outre, une contre-électrode (13) en forme de goulotte annulaire, qui enveloppe partiellement l'électrode (12) et qui protège sa surface contre le retour éventuel de gouttelettes en suspension.

L'invention prévoit que la bouteille électrostatique (1) prend la forme d'une enveloppe métallique connectée au circuit électrique du système d'injection, et présentant une charge de même signe que l'électrode immergée (8). L'enveloppe comporte, en outre, des pores dont la dimension, typiquement millimétrique, offre une bonne perméabilité aux gaz tout en maintenant un niveau de potentiel suffisamment élevé pour empêcher les gouttelettes de s'échapper. L'ensemble de ces pores se concentrent dans deux aires situées respectivement au sommet de la bouteille (1), à l'aplomb du condenseur (2), et dans la partie inférieure de son flanc, afin de permettre l'entrée des gaz issus de la source de chaleur (3). Par ailleurs, le fond de la bouteille électrostatique (1) présente une ouverture, typiquement en forme d'entonnoir (14) menant au circuit d'évacuation de la solution résiduelle.

Le condenseur (2) se trouve sur le trajet des gaz chargés en vapeur qui émanent du sommet de la bouteille électrostatique (1). Il se présente typiquement sous la forme d'un ensemble de tubulures munie d'ailettes en matériau thermiquement conducteur, et refroidies par la circulation de la solution à traiter, avant qu'elle n'atteigne la buse (4). Ainsi, le liquide est préchauffé en amont de son entrée dans la chambre. Le distillat qui se condense au contact de la surface d'échange externe des tubulures tombe dans une cuvette (15) en vue de son stockage ou de sa distribution.

Les gaz relativement chauds et secs qui sortent du condenseur (2) sont aspirés dans une conduite verticale (16) par thermosiphon ou ventilation mécanique (17). La source de chaleur (3) est localisée au point bas de cette conduite (16), afin d'exploiter au mieux le phénomène de convection spontanée. Les gaz ainsi chauffés pénètrent par les pores du flanc inférieur de la bouteille pour entamer un nouveau cycle. L'énergie fournie par la source (3) peut indifféremment provenir d'une résistance électrique, d'une centrale thermique quelconque, ou de tout autre dispositif de production de chaleur extérieur à l'invention.

Suivant un mode de réalisation privilégié mais non exclusif, le dispositif de distillation comporte également un système de pompe (18) assurant la circulation de la solution à traiter jusqu'à la buse d'injection (4). Le cas échéant, des pompes additionnelles peuvent être mises en oeuvre pour faciliter l'extraction des produits de la distillation. Ces pompes peuvent également servir au maintien d'une pression réduite, voire d'un vide partiel, dans la chambre et ainsi se rapprocher des conditions d'ébullition du liquide.

Par ailleurs la solution entrante peut avantageusement faire l'objet d'un filtrage préalable (19), en amont de la pompe (18), pour en retirer les particules solides les plus volumineuses. Un tel filtrage est en particulier indispensable, dans le cas d'une solution entrante provenant directement du milieu marin.

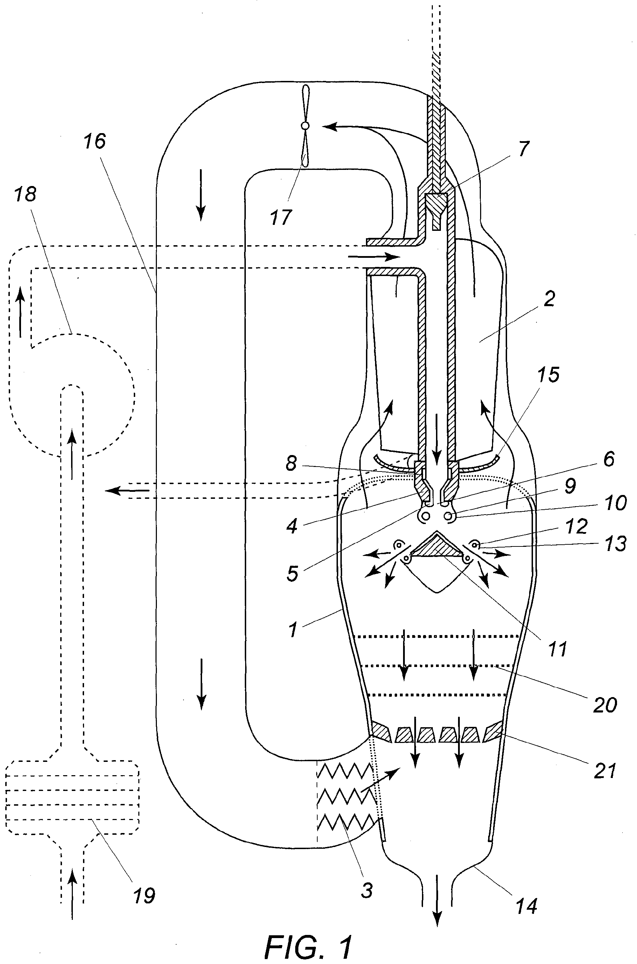

En complément, un ou deux échangeurs thermiques non représentés sur la figure 1 peuvent respectivement assurer un transfert de chaleur entre la solution à traiter et le distillat ou entre la solution à traiter et le résidu.

Un système optionnel de tamisage des gouttelettes peut être intégré dans la bouteille électrostatique (1), de manière optimiser le phénomène d'évaporation, et à contrôler la concentration du résidu.

Selon l'invention, deux solutions techniques sont envisageables et éventuellement combinables.

La première consiste à utiliser un jeu de grilles métalliques horizontales (20), portées au potentiel électrique de la bouteille (1), et dont les trous, sensiblement plus larges que les pores de la bouteille (1), autorisent le passage des gouttelettes les plus fines, mais font obstacle aux plus grosses.

La seconde se fonde sur l'utilisation d'une ou de plusieurs plaques (21) chauffées à une température telle qu'elles provoquent la caléfaction immédiate des gouttelettes qui s'en approchent. Des perforations pratiquées dans les plaques (21) ont une largeur sensiblement supérieure aux pores de la bouteille (1), afin de permettre le passage des gouttelettes les plus fines. Accessoirement, un relief en forme d'alvéoles coniques centrées sur les perforations peut s'avérer utile à la lévitation des gouttelettes les plus grosses. La température des plaques (21) doit être maintenue aussi stable et homogène que possible. Ainsi, l'invention prévoit que les plaques sont constituées d'un matériau thermiquement conducteur, et intègrent leur propre source de chaleur, par exemple sous la forme d'un serpentin pris dans l'épaisseur d'une plaque (21), et parcourant toute sa surface.
Du fait de leur température, les plaques contribuent au chauffage de la colonne de gaz. À ce titre, il est avantageux de les placer aussi bas que possible au sein de la bouteille (1). Dans l'hypothèse où les plaques dégagent une chaleur suffisante pour que les gaz ascendants évaporent efficacement le fluide nébulisé, il est envisageable de se dispenser de la source de chaleur (3) située à l'extérieur de la bouteille (1); ce mode de réalisation particulier conduit à une structure relativement compacte.

D'après l'invention, le dispositif dans son ensemble peut comprendre plusieurs chambres de distillation suivant la description qui précède. Les différentes chambres peuvent être montées en série, les unes à la suite des autres, afin d'accroître le taux de distillation de l'ensemble, ou en parallèle, afin d'augmenter la quantité de distillat produite sans modifier le taux de distillation.

Dans le cas d'un montage en série, les chambres du dispositif sont typiquement échelonnées en température et en pression, selon un schéma classique de distillation multi-étages: la solution entrant dans le dispositif traverse les condenseurs respectifs des différentes chambres de la plus froide à la plus chaude; puis elle est injectée et traitée dans la première chambre dont le résidu est injecté dans la seconde, et ainsi de suite. De cette manière, la température du résidu décroît de chambre en chambre, et avec elle la pression afin de maintenir les conditions d'une évaporation favorable. La diminution de la pression d'une chambre à la suivante est le fait des pompes d'extraction des solutions résiduelles successives.

## Revendications

1. Un dispositif de distillation par évaporation comportant une ou plusieurs chambres de distillation agencées en série ou en parallèle contenant :
- une source de chaleur (3) insufflant des gaz chauds et secs à l'intérieur de la chambre;
- un condenseur (2) refroidi par la solution à traiter;
- un système de convection par thermosiphon ou ventilation mécanique aspirant les gaz secs issus du condenseur (2) pour les réintroduire dans la partie inférieure de la chambre; le dispositif étant configuré de façon à ce que:
- la distillation s'effectue sans mouillage de la source de chaleur, la solution à traiter étant introduite dans la chambre de distillation à l'aide d'un système de buse (4) produisant un jet de gouttelettes électrisées par l'application d'une différence de potentiel électrique entre une électrode immergée (8), résistante à la corrosion, située dans le canon de la buse (4), et une électrode déportée (9), située à l'aplomb de ce même canon;
- la distillation s'effectue sans contact des gouttelettes de solution avec les parois de la chambre, la zone d'évaporation étant entièrement contenue dans une bouteille de confinement électrostatique (1) configurée pour être chargée à la même polarité que l'électrode immergée (8), et pour agir par répulsion électrique sur les gouttelettes;
- la distillation s'effectue sans contamination du condenseur (2) par les gouttelettes de solution à traiter qui sont en suspension dans les gaz de la bouteille de confinement électrostatique (1), les parois de la bouteille (1) comportant, en partie supérieure, des pores laissant échapper les gaz vers le condenseur, mais dont les dimensions sont suffisamment petites pour constituer une barrière électrostatique imperméable aux gouttelettes en suspension, ainsi que d'autres pores dans la paroi de la bouteille (1) permettent l'entrée des gaz en provenance de la source de chaleur (3);
- la solution résiduelle, à l'issue du processus d'évaporation, a cédé une grande partie de sa chaleur, ce qui la rend moins corrosive ou entartrante, afin que la solution résiduelle, ne présentant plus de risque pour les conduites du dispositif, puisse être évacuée par une simple ouverture (14) en partie inférieure de la bouteille (1).

2. Un dispositif de distillation selon la revendication 1 , **caractérisé en ce que** l'électrode déportée (9) est de forme annulaire, coaxiale avec le canon de la buse (4), de manière à polariser et accélérer le jet de gouttes sans contact avec sa surface, et protégée du retour des gouttelettes en suspension dans la bouteille (1) au moyen d'un écran répulsif (10) disposé à sa périphérie.

3. Un dispositif de distillation selon la revendication 2, **caractérisé en ce que** chaque chambre est dotée d'un système complémentaire de répartition et de nébulisation des gouttelettes constitué par:
- une électrode de répartition (11) comportant un ensemble de rainures ou de canaux répulsifs;
- un jeu de lentilles électriques, protégées par des contre-électrodes (13), pulvérisant les gouttelettes à leur sortie de l'électrode de répartition (11).

4. Un dispositif de distillation selon l'une quelconque des revendications précédentes, **caractérisé en ce qu'**un ensemble d'échangeurs thermiques, judicieusement répartis sur le parcours de la solution entrante, assurent, par préchauffage, le recyclage de la chaleur contenue dans les produits de distillation.

5. Un dispositif de distillation selon l'une quelconque des revendications précédentes, **caractérisé en ce qu'**il comporte les moyens de pompage (18) et de filtrage (19) nécessaires à l'extraction des produits de distillation et au maintien d'une pression favorable à l'évaporation des gouttelettes, et à l'alimentation de chaque buse (4) en solution à traiter.

6. Un dispositif de distillation selon l'une quelconque des revendications précédentes, **caractérisé en ce que** chaque chambre comporte une ou plusieurs grilles de tamisage électrostatique sans contact (20) qui accroissent la durée de séjour des gouttelettes dans la zone d'évaporation, en ne permettant, par répulsion, que le passage des gouttelettes les plus fines.

7. Un dispositif de distillation selon l'une quelconque des revendications précédentes, **caractérisé en ce que** chaque chambre comporte une ou plusieurs plaques chauffantes (21) qui présentent un relief en forme d'alvéoles coniques, centrées sur des perforations, afin de permettre le passage des gouttelettes les plus fines, les plaques chauffantes (21) adaptées pour être maintenues à une température stable, typiquement au-dessus de 160° C, afin de permettre la caléfaction des gouttelettes qui s'en rapprochent, les gouttelettes les plus grosses restant bloquées en lévitation dans les alvéoles jusqu'à atteindre une taille leur permettant de passer par les perforations.

8. Un dispositif de distillation selon l'une quelconque des revendications précédentes, **caractérisé en ce que** la buse (4) est tapissée, sur sa paroi intérieure (5) d'un revêtement antiadhésif, et dispose d'un système mécanisé de nettoyage automatique (7) limitant les risques de formation de dépôts sur cette paroi (5).

## Patentansprüche

1. Vorrichtung zur Destillation durch Verdampfung, umfassend eine oder mehrere Destillationskammern, die in Reihe oder parallel angeordnet sind, enthaltend:
- eine Wärmequelle (3), die heiße und trockene Gase in das Innere Kammer bläst;
- einen Kondensator (2), der durch die zu behandelnde Lösung gekühlt wird;
- ein Konvektionssystem durch Thermosiphon oder mechanische Belüftung, wodurch die trockenen Gase vom Kondensator (2) abgesaugt werden, um sie wieder in den unteren Teil der Kammer einzuleiten;
wobei die Vorrichtung so konfiguriert ist, dass:
- die Destillation durchgeführt wird ohne die Wärmequelle zu benetzen, wobei die zu behandelnde Lösung in die Destillationskammer mittels eines Düsensystems (4) eingeleitet wird, das einen Strahl von elektrisch aufgeladenen Tröpfchen erzeugt durch die Anwendung einer elektrischen Potentialdifferenz zwischen einer korrosionsbeständigen eingetauchten Elektrode (8), die in dem Lauf der Düse (4) angeordnet ist, und einer versetzten Elektrode (9), die in einer Linie des gleichen Laufs angeordnet ist;
- wobei die Destillation ohne Kontakt der Tröpfchen der Lösung mit den Wänden der Kammer durchgeführt wird,
wobei die Verdampfungszone vollständig in einem elektrostatischen Einschlussbehältnis (1) enthalten ist, das so konfiguriert ist, dass es auf die gleiche Polarität wie die eingetauchte Elektrode (8) geladen wird und durch elektrische Abstoßung auf die Tröpfchen wirkt;
- wobei die Destillation ohne Verunreinigung des Kondensators (2) durch die Tröpfchen der zu behandelnden Lösung, die in den Gasen der elektrostatischen Einschlussbehältnisses (1) suspendiert sind, durchgeführt wird,
wobei die Wände des Behältnisses (1) im oberen Teil Poren, die Gas zum Kondensator entweichen lassen, deren Abmessungen jedoch klein genug sind, um eine elektrostatische Barriere zu bilden, die für suspendierte Tröpfchen undurchlässig ist, sowie andere Poren in der Wand des Behältnisses (1) aufweisen, die den Eintritt von Gas aus der Wärmequelle (3) erlauben;
- wobei die Restlösung am Ende des Verdampfungsprozesses einen großen Teil ihrer Wärme abgegeben hat, wodurch sie weniger korrosiv oder ablagernd wird, so dass die restliche Lösung kein Risiko mehr für die Leitungen der Vorrichtung darstellt, wobei sie durch eine einfache Öffnung (14) im unteren Teil des Behältnisses (1) abgeleitet werden kann.

2. Destillationsvorrichtung nach Anspruch 1, **dadurch gekennzeichnet, dass** die versetzte Elektrode (9) ringförmig ist, koaxial mit dem Lauf der Düse (4), um den Strahl von Tropfen ohne Kontakt mit seiner Oberfläche zu polarisieren und zu beschleunigen, und vor der Rückkehr von Tröpfchen, die in dem Behältnis (1) suspendiert sind, mittels eines Abstoßungsschirms (10) zu schützen, der an ihrer Peripherie angeordnet ist.

3. Destillationsvorrichtung nach Anspruch 2, **dadurch gekennzeichnet, dass** jede Kammer mit einem komplementären Verteilungs- und Vernebelungssystem der Tröpfchen versehen ist, bestehend aus:
- einer Verteilungselektrode (11) mit einem Satz abstoßender Rillen oder Kanäle;
- einem Satz von elektrischen Linsen, die durch Gegenelektroden (13) geschützt sind, welche die Tröpfchen bei ihrem Austritt aus der Verteilungselektrode (11) zerstäuben.

4. Destillationsvorrichtung nach einem der vorhergehenden Ansprüche, **dadurch gekennzeichnet, dass** ein Satz von Wärmetauschern, die zweckmäßigerweise über den Weg der eintretenden Lösung verteilt sind, durch Vorwärmen die Rückführung der in den Destillationsprodukten enthaltenen Wärme gewährleistet.

5. Destillationsvorrichtung nach einem der vorhergehenden Ansprüche, **dadurch gekennzeichnet, dass** sie die Pumpen (18)- und die Filterungsmittel (19) umfasst, die für die Extraktion der Destillationsprodukte und die Aufrechterhaltung eines Drucks erforderlich sind, der für die Verdampfung der Tröpfchen und die Versorgung jeder Düse (4) in der zu behandelnden Lösung vorteilhaft ist.

6. Destillationsvorrichtung nach einem der vorhergehenden Ansprüche, **dadurch gekennzeichnet, dass** jede Kammer ein oder mehrere berührungslose elektrostatische Filtergitter (20) aufweist, die die Verweilzeit der Tröpfchen in der Verdampfungszone erhöhen, indem sie durch Abstoßung nur den Durchgang der feinsten Tröpfchen ermöglichen.

7. Destillationsvorrichtung nach einem der vorhergehenden Ansprüche, **dadurch gekennzeichnet, dass** jede Kammer eine oder mehrere Heizplatten (21) umfasst, die ein Relief in Form von konischen Zellen aufweisen, die auf Perforationen zentriert sind, um den Durchgang der feinsten Tröpfchen zu ermöglichen, wobei die Heizplatten (21) dazu geeignet sind bei einer stabilen Temperatur von typischerweise über 160 °C gehalten zu werden, um die Erwärmung der Tröpfchen, die sich ihr nähern, zu ermöglichen, wobei die größten Tröpfchen in Levitation zurückgehalten werden in den Zellen bis zur Erreichung einer Größe, die es erlaubt, dass sie durch die Perforationen passieren können.

8. Destillationsvorrichtung nach einem der vorhergehenden Ansprüche, **dadurch gekennzeichnet, dass** die Düse (4) an ihrer Innenwand (5) mit einer Antihaftbeschichtung versehen ist und ein mechanisiertes System (7) zur automatischen Reinigung aufweist, das die Risiken von Ablagerungen auf dieser Wand (5) begrenzt.

## Claims

1. Evaporative distillation device comprising one or more distillation chambers arranged in series or in parallel, containing:
- a heat source (3) that blows hot dry gases into the chamber;
- a condenser (2) cooled by the solution to be treated;
- a system of convection by thermosiphon or mechanical ventilation that sucks up the dry gases from the condenser (2) in order to reintroduce them into the lower part of the chamber;
the device being configured such that:
- the distillation is carried out without wetting of the heat source, the solution to be treated being introduced into the distillation chamber using a nozzle (4) system that produces a jet of droplets electrically charged by the application of an electric potential difference between a corrosion-resistant submerged electrode (8), located in the barrel of the nozzle (4), and an offset electrode (9) located in line with this same barrel;
- the distillation is carried out without contact of the droplets of solution with the walls of the chamber, the evaporation zone being entirely contained in an electrostatic confinement bottle (1) configured so as to be charged to the same polarity as the submerged electrode (8), and so as to act by electric repulsion on the droplets;
- the distillation is carried out without contamination of the condenser (2) by the droplets of solution to be treated that are in suspension in the gases of the electrostatic confinement bottle (1), the walls of the bottle (1) comprising, in the upper part, pores that let the gases escape towards the condenser, but the dimensions of which are small enough to form an impermeable electrostatic barrier to the droplets in suspension and also other pores in the wall of the bottle (1) allow the entry of the gases originating from the heat source (3);
- the residual solution, at the end of the evaporation process, has given up a large portion of its heat, which renders it less corrosive or scale-forming, so that the residual solution, no longer presenting a risk for the ducts of the device, can be discharged through a simple opening (14) in the lower part of the bottle (1).

2. Distillation device according to Claim 1, **characterized in that** the offset electrode (9) is of annular shape, coaxial with the barrel of the nozzle (4), so as to polarize and accelerate the jet of drops without contact with the surface thereof, and is protected from the return of the droplets in suspension in the bottle (1) by means of a repulsive screen (10) positioned at its periphery.

3. Distillation device according to Claim 2, **characterized in that** each chamber is provided with a complementary system for distributing and nebulizing the droplets, formed by:
- a distribution electrode (11) comprising an assembly of repulsive grooves or channels;
- a set of electrostatic lenses protected by counterelectrodes (13), spraying the droplets as they leave the distribution electrode (11).

4. Distillation device according to any one of the preceding claims, **characterized in that** an assembly of heat exchangers, appropriately distributed over the path of the incoming solution ensure, by preheating, the recycling of the heat contained in the distillation products.

5. Distillation device according to any one of the preceding claims, **characterized in that** it comprises the pumping means (18) and filtering means (19) necessary for the extraction of the distillation products and for maintaining a pressure favourable to the evaporation of the droplets, and for supplying each nozzle (4) with solution to be treated.

6. Distillation device according to any one of the preceding claims, **characterized in that** each chamber comprises one or more contactless electrostatic screening grids (20) that increase the residence time of the droplets in the evaporation zone, by allowing, by repulsion, only the passage of the finest droplets.

7. Distillation device according to any one of the preceding claims, **characterized in that** each chamber comprises one or more hot plates (21) that have a relief in the form of conical cells, centred on perforations, in order to allow the passage of the finest droplets, the hot plates (21) suitable for being maintained at a stable temperature, typically above 160°C, in order to allow the calefaction of the droplets that come close thereto, the largest droplets remaining immobilized in terms of levitation in the cells until they reach a size that enables them to pass through the perforations.

8. Distillation device according to any one of the preceding claims, **characterized in that** the nozzle (4) is lined, on its inner wall (5) with a non-stick coating, and has a mechanized automatic cleaning system (7) that limits the risks of formation of deposits on this wall (5).
